# EUROPEAN PATENT SPECIFICATION

(11) **EP 0 554 889 B1**
(45) Date of publication and mention of the grant of the patent: **11.09.1996**
(21) Application number: 93101821.2
(22) Date of filing: 05.02.1993
(51) Int. Cl.: B62D 25/20, B60K 1/04

(54) **Universal body for a vehicle**
Universal-Fahrzeugaufbau
Caisse de véhicule universelle

(30) Priority: 07.02.1992 IT TO920096
(43) Date of publication of application: 11.08.1993
(73) Proprietor: FIAT AUTO S.p.A., I-10135 Torino (IT)
(72) Inventor: Basiletti, Giovanni, I-10093 Collegno (IT)
(74) Representative: Plebani, Rinaldo

(56) References cited:
- EP-A- 0 390 752
- EP-A- 0 397 544
- DE-A- 3 141 164
- FR-A- 867 778
- FR-A- 1 262 367
- FR-A- 2 249 544
- FR-A- 2 318 757
- US-A- 1 414 292
- US-A- 3 493 068
- US-A- 3 983 952
- US-A- 4 216 839
- US-A- 5 002 333
- PATENT ABSTRACTS OF JAPAN vol. 15, no. 457 (M-1181)20 November 1991 & JP-A-03 193 568 (MAZDA) 23 August 1991 & US-A-5 102 187
- PATENT ABSTRACTS OF JAPAN vol. 3, no. 76 (M-64)29 June 1979 & JP-A-54 053 417 (HONDA) 26 April 1979
- PATENT ABSTRACTS OF JAPAN vol. 7, no. 237 (M-250)(1382) 21 October 1983 & JP-A-58 126 263 (NISSAN) 27 July 1983

## Description

The present invention relates to a universal body for a vehicle, in particular for such a vehicle, as may be both of the electric traction type and of the traditional propulsion type, identical on the outside.

As it is well known, for instance from US patent Us-A-5102187 and from European patent applications EP-A-0397544 and EP-A-0390752 (of the same Applicant), bodies for vehicles may be obtained by assembling their members in such a way as to obtain box-like parts constituting frame backstays and cross members to gain stiffness of vehicle body and bearing of the mechanical parts.

However, all vehicles, which are currently known to be provided with an electric traction system, much as they derive directly from a corresponding traditional propulsion (endothermic engine) model, are equipped with either frame or unitized body specifically designed for electric traction vehicles, so that they may better stand the static and dynamic stress generated by the mass of the manifold batteries feeding either electric engine or engines, usually placed at the rear.

The presence of a plurality of batteries and their being arranged inside the whole of the vehicle, instead of inside one single, delimited space, indeed calls for a thorough redesigning of the vehicle body, both to enable possible shock absorption areas to be strengthened in the best possible way, and to properly support the weight of said batteries.

As a consequence, the electric versions of current production models have high production costs; besides, they are generally dangerous for users in case of violent impacts, in that, due to the high inertia, the batteries mass, located at the rear, tends to travel on penetrating the passenger compartment.

Aim of the present invention is the embodiment of a universal body for a vehicle that may be supplied with both traditional propulsion and electric traction system, such as may fit, with the slightest possible modifications, both types, in both cases allowing for high hardness of the body to be maintained and for passengers to be protected from the batteries further to impacts.

According to the present invention, there is provided a universal body for a vehicle as may be both of the traditional propulsion type and of the electric traction type, identical on the outside, comprising an identical base structure for both types and comprising, in turn, a front frame substructure, a rear substructure and a flatbed-like structure defining a lower part of a passenger compartment of the vehicle and connecting said front and rear substructures to each other; characterized by the fact that the shape of said base structure is such, that it is capable to receive, integral with said substructures, as regards the electric traction type, a plurality of reinforcing elements, capable of defining, along with said substructures, tridimensional stiffening portions of the body of said base structure; said stiffening portions being capable of containing the batteries and arranged in such a way, as to transfer on to the front substructure most of the weight of said batteries.

In this way, the electric type, as compared to the current production one, merely features a few more elements that, while not causing the pre-existing
stress-bearing capacity of the body of the current production type to be modified, do nothing but offset, from a mechanical point of view, the bigger stress caused by the presence of the batteries. Moreover, the increase in bulk, caused by the presence of said additional structural elements, as compared to the current production type, is exploited to house the batteries, on the one side strongly rationalizing the use of space, of particular momentum on small vehicles, and, on the other side, ensuring greater safety for users. Finally, passengers are well protected in case of violent impact, in that the body according to the present invention allows for an outlet for the batteries to be expelled, inertially, towards the front, avoiding penetration by same into the vehicle passengers compartment; indeed, most batteries are already lodged up front, instead of at the rear of the vehicle, like in the known embodiments.

The present invention will be better described by way of a non-limiting example, with reference to the accompanying drawings, in which:

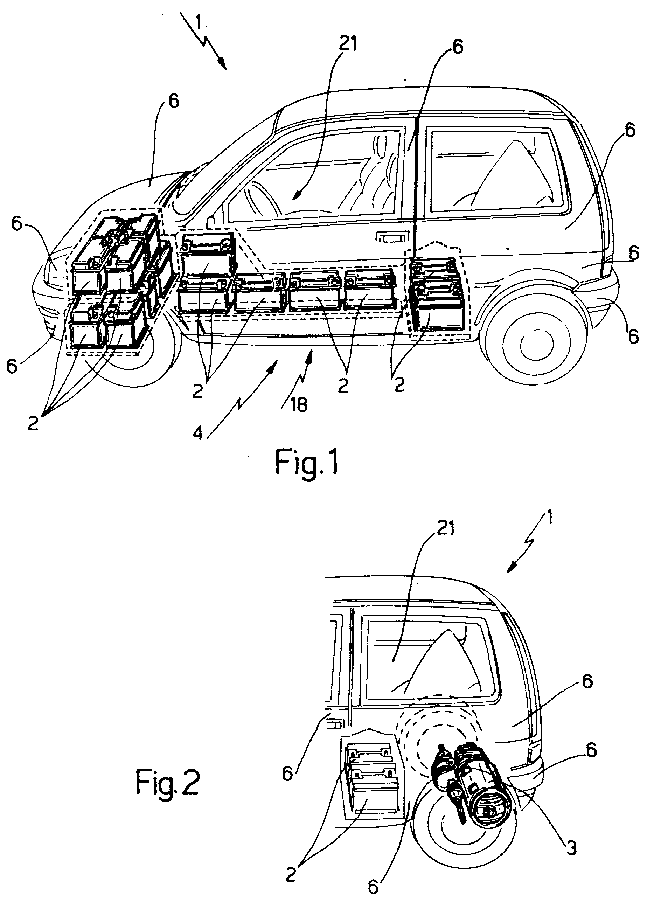

Fig. 1 shows a side elevation of a vehicle provided with such a body as obtained according to the present invention;
Fig. 2 shows a partial side elevation of a rear portion of the vehicle in Fig. 1;
Fig. 3 shows an exploded view of a universal body obtained as according to the present invention;
Fig. 4 shows a top plan view of the body in Fig. 3;
Fig. 5 shows a section taken along line V-V of the body of Fig. 4;
Fig. 6 shows a partial front elevation of the body in Fig. 4;
Fig. 7 shows a partial rear elevation of the body in Fig. 4.

With reference to Fig.s 1 to 5, number 1 indicates a vehicle, in particular, a current production vehicle provided with an electric traction system, in which a series of batteries 2 is housed to feed an electric engine 3. By "current production vehicle" it is herein indicated that electric traction vehicle 1 is identical, on the outside, to the traditional propulsion (endothermic engine) type of same.

Vehicle 1 being provided with a body 4 comprising, in turn, a flatbed-like base structure 5 and a plurality of telescoping members 6, that may be fixed to base structure 5 to obtain a unitized body-work.

According to the present invention, base structure 5 of vehicle 1 is identical, both in the electric traction type, shown in the accompanying drawings, and in the "current production" type, which is not being shown hereby for simplicity's sake, provided, in the known fashion, with an endothermic propulsor. Base structure 5 comprises a box-like rectangular frame front substructure 7 presenting two backstays 8 extending to the front, cantilevered and connected to each other, in connection with their relevant free ends 11, by cross member 12.

Base structure 5 further comprises a first flatbed-like substructure 13, connected, so as to form an angle, with a relevant box-like cross member 14 and defining, along with the latter, a rear portion or substructure 15 of body 4; base structure 5 finally comprises a second flatbed-like substructure 16, connecting box-like front substructure 7 and said first flatbed-like rear substructure 13; second substructure 16 defining a lower part 18 of a passenger compartment 21 of vehicle 1.

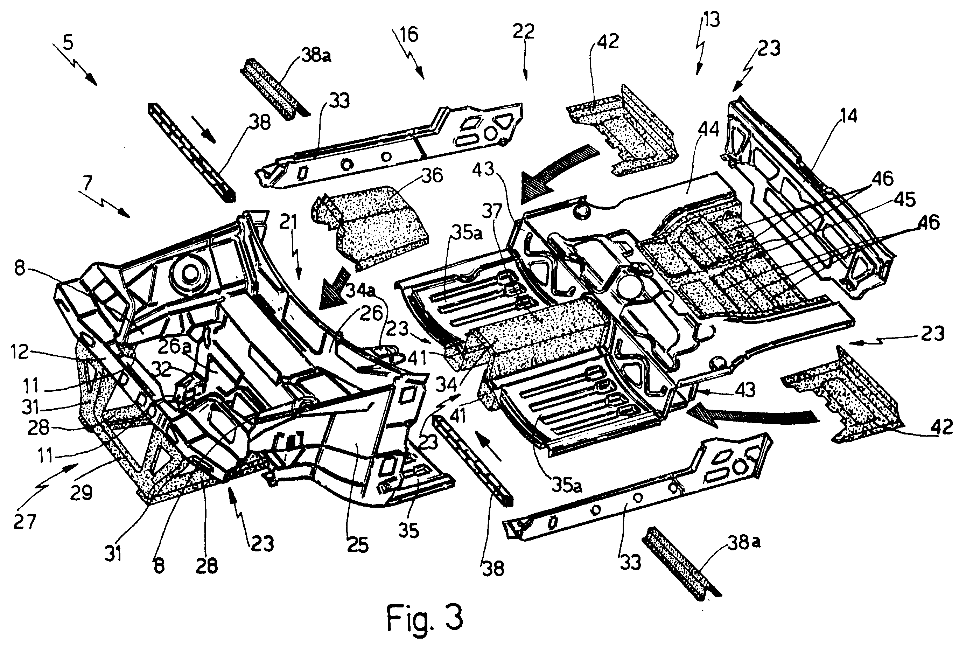

According to the present invention, the shape of base structure 5 is such, that it is capable of receiving, integrally fixed to substructures 7,16 and 15 of body 1, as regards the electric traction type shown herein, also a plurality of reinforcing members, marked in Fig. 3 by a dark grid and by number 22, capable of defining, together with said substructures, box-like tridimensional body portions 23, so as to stiffen base structure 5.

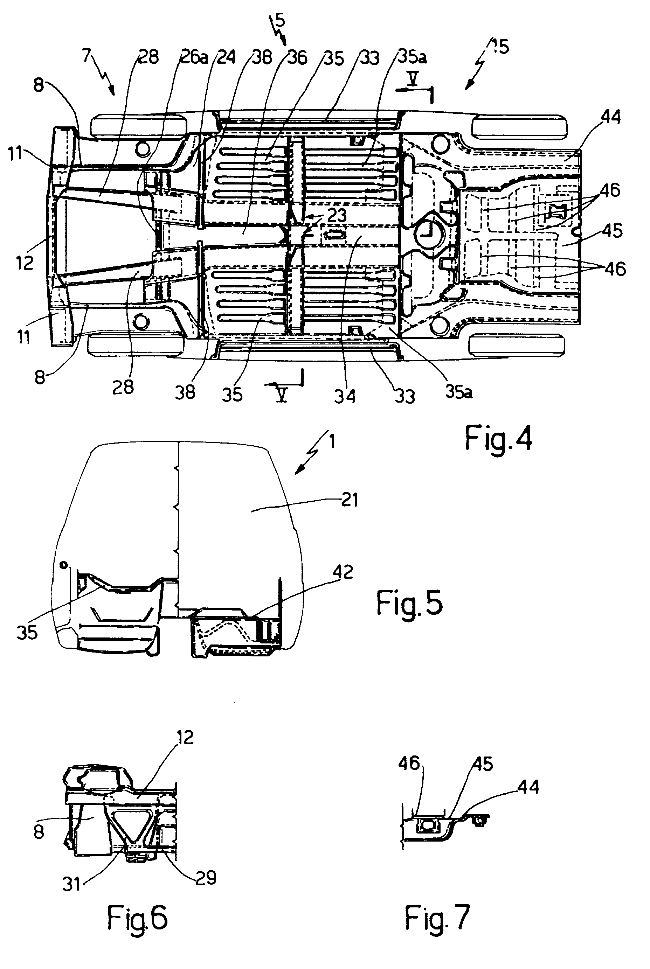

Front substructure 7 comprises a base element 24 essentially made up of two body center pillars 25, two relevant cross members 26, connected with each other by center pillars 25, two relevant panel members 35 and of a box-like member 34a, in the shape of an overturned U, inserted between panels 35 (only one of which is visible in Fig. 3); one of said reinforcing members 22 being defined by a box-like frame member 27, comprising two backstays 28, cross member 29 connecting backstays 28 to two relevant reticular center pillars 31, basically triangular in shape; two backstays 28 are linked to a relevant lower cross member 26a of cross members 26 of base member 24, whereas triangular center pillars 31 are connected to front cross member 12 of front substructure 7. A further reinforcing member 22 being defined by member 36, tunnel-like, overlapping member 34a and linked to upper cross member 26 and, through relevant opposite bar-shaped additional cross members, marked by number 38, to center pillars 25 (Fig. 4), defining, in such a way, one of box-like units 23.

Second flatbed-like substructure 16 comprises two box-like side backstays 33 defining two relevant underdoor outer members and comprising a center member 34, essentially tunnel-like, and two panel members 35a (similar to members 35) linking tunnel-like member 34 to backstays 33; tunnel-like member 34 is connected, up front, with relevant tunnel-like member 36 of substructure 7 and presents, to the rear, portion 37 linked to flatbed-like substructure 13. Finally, substructure 16 also comprises two relevant backstays 41, located to the side of and under tunnel-like member 34 and whose cross-section is in the shape of an overturned U, which are connected, along their whole length, with member 34, along one edge, and with overhanging panel 35a, along the other edge, thus creating, with member 34 and panels 35a, a further box-like reinforcing structure 23, arranged lengthwise along the vehicle center line; such a structure being integrated with the front reinforcing structure represented by frame 27, in that backstays 41 are connected, for instance by welding, with relevant backstays 28 of front substructure 7, in connection with center pillars 25 of base member 24.

Moreover, according to the present invention, box-like center member 34 is linked, in connection with the joint with member 36, to two relevant cross members 38a, in the shape of an overturned U, arranged along the connection between panels 35 and 35a, to overlap same and member 34; thus, two further box-like reinforcing members 23 are obtained (Fig. 4), transversally arranged with respect to the vehicle, connected with the center member and linking the two portions of lower part 18 of the vehicle passengers compartment, defined by panels 35,35a.

In relation to the connection between substructures 16 and 13, the latter is further provided with two relevant dihedral members 42 inserted between relevant rear portions 43, folded upwards, of panel members 35a and flatbed-like substructure 13, to create further box-like stiffening structures 23, arranged transversally. Flatbed-like substructure 13 consists of member 44, essentially in the shape of a horse-shoe, into which a panel member 45 is inserted, whereon relevant stiffening ribs 46 are obtained.

The non-limiting example, described hereinabove, clearly shows the configuration of both base 5 and additional body members 22 to be such, as to create, together, besides tridimensional stiffening and reinforcing members of body 1 in its whole, without causing, though, either base shape and structure to be altered, also housing members for batteries 2 feeding engine/engines 3. In the case in point, batteries 2 are housed inside the tunnel-like structure created by members 34,36, inside the hollow space obtained between members 42 and 43, most of them being housed inside the cage-like tridimensional structure defined by front substructure 7 and by the frame defined by backstays 28, cross member 29 and reticular center pillars 31. Moreover, such housing and stiffening structures are arranged one after the other, without interruption and outside the bulk of actual passenger compartment 21. In this way, were vehicle 1 to undergo a violent impact, consequently coming to a halt, batteries 2 are allowed inertial motion, thus being thrust out of vehicle 1 up front, without penetrating passenger compartment 21, and, therefore, without jeopardizing passengers' life. Besides, most batteries 2 and, therefore, their weight, are transferred to the front of passenger compartment 21, in connection with front substructure 7, which may be easily reinforced without causing the overall body structure to be altered, and are already located outside passengers compartment 21.

In conclusion, the universal body, as described hereinabove, is that of a regular current production vehicle provided with an endothermic engine, but for the presence of a few additional reinforcement members suitably applied; so that a low-budget universal body is obtained, which, no ridesigning of the body being necessary, perfectly fits such a vehicle, too, as may be provided with an electric traction system, allowing for the higher static stress, caused by the weight of the batteries feeding the electric engine/engines, to be born, and for the higher dynamic stress, caused by possible impacts of the vehicle against possible obstacles/other vehicles, to be absorbed, said stress being stress amplified, in comparison to the corresponding current production vehicles provided with endothermic engine, due to the bigger mass of the electric vehicle, owing to the presence of said batteries.

## Claims

1. A universal body (4) for a vehicle (1), such as may be both of the traditional propulsion type and of the electric traction type, identical on the outside, comprising a base structure (5), identical for both types and comprising, in turn, a front frame substructure (7), a rear substructure (15) and a flatbed-like structure (16) defining a lower part (18) of a passengers compartment (21) of vehicle (1) and connecting front substructure (7) and rear substructure (15) with each other; characterized by the fact that the shape of base structure (5) is such, as to be capable of receiving, integrally fixed to said substructures (7,15,16), as to the embodiment relating to the electric traction type, a plurality of reinforcement members (22), capable of defining, along with substructures (7,15,16), tridimensional stiffening portions (23) of the body of base structure (5); said stiffening portions (23) being capable of containing the batteries and being arranged in such a way, as to transfer the greatest part of the batteries weight on to front substructure (7).

2. A body as claimed in Claim 1, characterized by the fact that said base structure (5) is generally flatbed-like, said body further comprising a plurality of telescoping members (6) capable of being fixed to base structure (5) to create a unitized body-work; base structure (5) comprising: a front box-like rectangular frame substructure (7), comprising, in turn, two backstays (8) extending to the front, cantilevered and linked to each other, in connection with relevant free ends (11), by means of a cross member (12); a first flatbed-like substructure (13) connected, so as to form an angle, with a relevant box-like cross member (14) and defining, together with the latter, a rear substructure (15) of said body (4); and a further flatbed-like substructure (16) connecting box-like front substructure (7) with first rear flatbed-like substructure (13).

3. A universal body (4) as claimed in Claim 2, characterized by the fact that front substructure (7) comprises a base member (24) comprising two center pillars (25) and two relevant cross members (26) connecting said center pillars; a first reinforcement member (22) being defined by a box-like frame member (27) comprising two backstays (28), a cross member (29) connecting said backstays (28) and two relevant reticular center pillars (31), essentially triangular in shape; said two backstays (28) being connected with a relevant lower cross member (26a) of cross members (26) of base member (24); and said two triangular center pillars (31) being connected with front cross member (12) of said front substructure (7).

4. A universal body (4) as claimed in Claim 3, characterized by the fact that second flatbed-like substructure (16) comprises two box-like side backstays (33) defining two relevant underdoor outer members (33), a center member (34), essentially in the shape of a tunnel, and two panel members (35a) connecting tunnel-like member (34) with said side backstays (33); tunnel-like member (34) being connected, towards its front, with a relevant tunnel-like member (36), fixed in an integral fashion, linked to base member (24) of front substructure (7) and, towards its rear, presenting a portion (37) connected with panel members (35a) and with said first flatbed-like substructure (13); tunnel-like member (36), connected with said base member (24), being linked, to the side, by means of two relevant opposite cross members (38), to said center pillars (25) of base member (24) of front substructure (7) and tunnel-like member (34) of second flatbed-like substructure (16) being linked, in respect to the connection with the other tunnel-like member (36), to two relevant cross members (38a), in the shape of an overturned U, arranged along the connection between said panels (35a) of second flatbed-like substructure (16) and relevant panels (35) being part of front substructure (7) and transversally connected with said box-like side backstays (33).

5. A universal body (4) as claimed in Claim 4, characterized by the fact that said tunnel-like member (34) of second flatbed-like substructure (16) is provided, in an integral fashion, below and at the side, with two relevant backstays (41), connected with said backstays (8) of front substructure (7) in connection with said center pillars (25) of said base member (24); between said second and said first flatbed-like substructure (13,16) there being further inserted two relevant dihedral members (42), inserted between said first flatbed-like substructure (13) and relevant rear portions (43) of said two panels (35a) of second flatbed-like substructure (16), folded upwards.

6. A universal body (4) as claimed in Claim 5, characterized by the fact that said first flatbed-like substructure (13) consists of a first member (44), essentially in the shape of a horse-shoe, wherein panel member (45) is inserted, relevant reinforcement ribs (46) being obtained on the latter.

## Patentansprüche

1. Universal-Karosserie (4) für ein Fahrzeug (1), das sowohl vom traditionellen Antriebstyp als auch vom Elektroantriebstyp sein kann, aber äußerlich gleich ist, umfassend eine für beide Typen gleiche Basisstruktur (5), die ihrerseits eine Frontrahmenbaugruppe (7), eine hintere Baugruppe (15) und eine Flachbett-Baugruppe (16) enthält, die den unteren Teil des Fahrgastraumes (21) des Fahrzeugs (1) bildet und die Frontrahmenbaugruppe (7) und die hintere Baugruppe (15) miteinander verbindet, dadurch gekennzeichnet, daß die Form der Basisstruktur (5) derart ist, daß sie in der Ausführungsform für den Elektroantriebstyp eine Mehrzahl von Verstärkungsteilen (22) erhalten kann, die gänzlich an den besagten Baugruppen (7, 15, 16) befestigt sind und mit den Baugruppen (7, 15, 16) dreidimensionale Versteifungsbereiche (23) der Basisstruktur (5) der Karosserie bilden können, wobei die Versteifungsbereiche (23) die Batterien aufnehmen können und derart angeordnet sind, daß sie den größten Teil des Gewichts der Batterie auf die Frontrahmenbaugruppe (7) übertragen.

2. Karosserie nach Anspruch 1, dadurch gekennzeichnet, daß die Basisstruktur (5) im allgemeinen flachbettförmig ist, wobei besagte Karosserie außerdem eine Mehrzahl von zusammenschiebbaren Teilen (6) aufweist, die mit der Basisstruktur (5) verbindbar sind, um ein komplettes Karosseriewerk zu schaffen, und wobei die Basisstruktur (5) umfaßt
- eine kastenförmige, rechteckige Frontrahmenbaugruppe (7), die ihrerseits zwei nach vom weisende, freitragende und mittels einer Querstrebe (12) an ihren zugehörigen freien Enden (6) miteinander verbundene Verstrebungen (8) enthält,
- eine erste Flachbett-Baugruppe (13), die mit einer zugehörigen kastenförmigen Querstrebe (14) unter Bildung eines Winkels verbunden ist und zusammen mit letzterer eine hintere Baugruppe (15) der Karosserie (4) bildet, sowie
- eine weitere Flachbett-Baugruppe (16), die die kastenförmige Baugruppe (16), die die kastenförmige Baugruppe (7) mit der ersten hinteren Flachbett-Baugruppe (13) verbindet.

3. Universal-Karosserie (4) nach Anspruch 2, dadurch gekennzeichnet, daß die Frontbaugruppe (7) umfaßt
- ein Basiselement (24), das zwei Mittelstützen (25) und zwei zugehörige Querstreben (26) enthält, die die Mittelstützen verbinden, und
- ein erstes Verstärkungsteil (22), das von einem tastenförmigen Rahmenteil (27) gebildet wird und zwei Verstrebungen (28), ein Querteil (29), das die Verstrebungen (28) verbindet, und zwei zugehörige netzartige, im wesentlichen dreiecksförmige Mittelstützen (31) enthält,
wobei die besagten Verstrebungen (28) mit einer zugehörigen unteren Querstrebe (26a) der Querstreben (26) des Basiselements (24) verbunden sind und die beiden besagten dreiecksförmigen Mittelstützen (31) mit der Front-Querstrebe (12) der Frontbaugruppe (7) verbunden sind.

4. Universal-Karosserie (4) nach Anspruch 3, dadurch gekennzeichnet, daß die zweite Flachbett-Baugruppe (16) zwei kastenförmige Seitenstreben (33), die zwei zugehörige Untertür-Außenteile (33) bilden, ein im wesentlichen tunnelförmiges Mittelteil (34) und zwei Plattenteile (35a), die das tunnelförmige Teil (34) mit besagten Seitenstreben (33) verbinden, umfaßt, wobei das tunnelförmige Teil (34) vom mit einem zugehörigen tunnelförmigen Teil (36) verbunden ist, das vollständig am Basiselement (24) der Front-Baugruppe (7) befestigt ist, und hinten ein Teil (37) aufweist, das mit Plattenteilen (35a) und mit der ersten Flachbett-Baugruppe (13) verbunden ist, wobei das tunnelförmige Teil (36), das mit besagtem Basiselement (24) verbunden ist, seitlich mittels zweier zugehöriger, gegenüberliegender Querteile (38) an besagten Mittelstützen (25) des Basiselements (24) der Front-Baugruppe (7) angebracht ist, und das tunnelförmige Teil (34) der zweiten Flachbett-Baugruppe (16) entsprechend der Verbindung mit dem anderen tunnelförmigen Teil (36) an zwei zugehörigen Querteilen (38a) angebracht ist, die die Form eines umgekehrten U haben und längs der Verbindung zwischen den Plattenteilen (35a) der zweiten Flachbett-Baugruppe (16) und den zugehörigen Plattenteilen (35) angeordnet sind, die ein Teil der Front-Baugruppe (7) und quer mit besagten kastenförmigen Seitenstreben (33) verbunden sind.

5. Universal-Karosserie (4) nach Anspruch 4, dadurch gekennzeichnet, daß besagtes tunnelförmiges Teil (34) der zweiten Flachbett-Baugruppe (16) unten und seitlich einstückig mit zwei zugehörigen Verstrebungen (41) ausgestattet ist, die über besagte Mittelstützen (25) des Basiselements (24) mit den Verstrebungen (8) der Front-Baugruppe (7) verbunden sind, wobei zwischen besagter zweiter und besagter erster Flachbett-Baugruppe (13, 16) außerdem zwei zugehörige V-förmige Teile (42) eingesetzt sind, und zwar aufwärts gefaltet zwischen besagter erster Flachbett-Baugruppe (13) und den zugehörigen hinteren Teilen (43) der Platten (35a) der zweiten Flachbett-Baugruppe (16).

6. Universal-Karosserie (4) nach Anspruch 5, dadurch gekennzeichnet, daß die erste Flachbett-Baugruppe (13) aus einem ersten, im wesentlichen hufeisenförmigen Teil (44) besteht, in das ein Plattenteil (45) eingesetzt ist und durch das zugehörige Verstärkungsrippen (46) auf letzterem erhalten werden.

## Revendications

1. Caisse universelle (4) pour un véhicule (1), qui peut être à la fois du type à propulsion classique et du type à traction électrique tout en étant extérieurement identique, qui comprend une structure de base (5) identique pour les deux types et comportant, en succession, une sous-structure de châssis avant (7), une sous-structure arrière (15) et une structure en forme de plateau (16) qui définit une partie inférieure (18) d'un compartiment passagers (21) du véhicule (1) et relie la sous-structure avant (7) et la sous-structure arrière (15) l'une à l'autre : caractérisée en ce que la configuration de la structure de base (5) est telle qu'elle peut recevoir, fixés solidairement aux dites sous-structures (7,15,16), dans le mode de réalisation prévu pour traction électrique, une pluralité d'éléments de renforcement (22) qui définissent,en combinaison avec les sous-structures (7,15,16), des parties tri-dimensionnelles (23) de raidissement de la caisse de la structure de base (5), lesdites parties de raidissement (23) pouvant contenir les accumulateurs et étant agencées de manière à transférer la plus grande partie du poids des accumulateurs sur la sous-structure avant (7).

2. Caisse suivant la revendication 1, caractérisée en ce que ladite structure de base (5) est sensiblement en forme de plateau, ladite caisse comprenant en outre une pluralité d'éléments télescopiques (6) qui peuvent être fixés à la structure de base (5) pour créer une carrosserie unitaire : la structure de base (5) comprenant :
- une sous-structure avant en forme de châssis rectangulaire en caisson (7) qui comporte elle-même deux bras (8) s'étendant vers l'avant, en porte-à-faux et reliés l'un à l'autre par une traverse (12) à l'endroit de leurs extrémités libres respectives (11) ;
- une première sous-structure en plateau (13) reliée, de façon à former un angle, avec une traverse en caisson correspondante (14) et définissant avec cette dernière une sous-structure arrière (15) de ladite caisse (4) ; et
- une autre sous-structure en plateau (16) reliant la sous-structure avant en caisson (7) à la première sous-structure arrière en plateau (13).

3. Caisse universelle (4) suivant la revendication 2, caractérisée en ce que la sous-structure avant (7) comprend un élément de base (24) comportant deux montants centraux (25) et deux traverses respectives (26) qui relient lesdits montants ; un premier élément de renforcement (22) étant défini par un élément de cadre en caisson (27) qui comporte deux bras (28), une traverse (29) reliant lesdits bras (28) et deux montants respectifs maillés (31) de forme sensiblement triangulaire, lesdits deux bras (28) étant reliés à une traverse inférieure correspondante (26a) faisant partie des traverses (26) de l'élément de base (24), et lesdits deux montants triangulaires (31) étant reliés à la traverse avant (12) de ladite sous-structure avant (7).

4. Caisse universelle (4) suivant la revendication 3, caractérisée en ce que la deuxième sous-structure en plateau (16) comprend deux longerons en caisson (33) qui définissent deux éléments extérieurs de bas de porte respectifs (33), un élément central (34) sensiblement en forme de tunnel, et deux éléments de panneau (35a) reliant l'élément en forme de tunnel (34) auxdits longerons (33) ; l'élément en forme de tunnel (34) étant relié, vers l'avant, à un élément en forme de tunnnel correspondant (36), fixé solidairement et relié à l'élément de base (24) de la sous-structure avant (7), l'élément en forme de tunnel (34) présentant, vers l'arrière, une partie (37) reliée aux éléments de panneau (35a) et à ladite première structure en plateau (13) ; l'élément en forme de tunnel (36) connecté audit élément de base (24) étant relié, sur le côté, au moyen de deux traverses opposées respectives (38), auxdits montants (25) de l'élément de base (24) de la sous-structure avant (7) et l'élément en forme de tunnel (34) de la deuxième sous-structure en plateau (16) étant relié, en relation à la jonction avec l'autre élément en forme de tunnel (36),à deux traverses correspondantes (38a) en forme de U inversé disposées le long de la connexion entre lesdits panneaux (35a) de la deuxième structure en plateau (16) et des panneaux correspondants (35) qui font partie de la sous-structure avant (7), et tranversalement connectées auxdits longerons en caisson (33).

5. Caisse universelle (4) suivant la revendication 4, caractérisée en ce que ledit élément en forme de tunnel (34) de la deuxième sous-structure en plateau (16) comporte, de façon solidaire, au-dessous et sur le côté, deux profilés correspondants (41) reliés aux dits bras (8) de la sous-structure avant (7) en relation avec lesdits montants centraux (25) dudit élément de base (24) ; deux éléments en dièdre correspondants (42) étant en outre insérés entre lesdites deuxième et première sous-structures en plateau (13,16), lesdits éléments en dièdre (42) étant insérés entre ladite première sous-structure en plateau (13) et des parties arrière respectives (43) desdits deux panneaux (35a) de la deuxième sous-structure en plateau (16), pliées vers le haut.

6. Caisse universelle (4) suivant la revendication 5, caractérisée en ce que ladite première sous-structure en plateau (13) comprend un premier élément (44) sensiblement en forme de fer à cheval dans lequel est inséré un élément de panneau (45), des nervures de renforcement appropriées (46) étant prévues sur ce dernier.
